# EUROPÄISCHE PATENTSCHRIFT

(11) **EP 1 611 184 B1**
(45) Veröffentlichungstag und Bekanntmachung des Hinweises auf die Patenterteilung: **27.09.2006**
(21) Anmeldenummer: 04721865.6
(22) Anmeldetag: 19.03.2004
(51) Int. Cl.: C08G 69/00, C08G 69/04, C08G 69/16

(54) **VERFAHREN ZUR HERSTELLUNG VON POLYAMIDEN**
METHOD FOR PRODUCING POLYAMIDES
PROCEDE DE PRODUCTION DE POLYAMIDES

(30) Priorität: 26.03.2003 DE 10313681
(43) Veröffentlichungstag der Anmeldung: 04.01.2006
(73) Patentinhaber: BASF Aktiengesellschaft, 67056 Ludwigshafen (DE)
(72) Erfinder: DEININGER, Jürgen, 68723 Oftersheim (DE); DEMETER, Jürgen, 67069 Ludwigshafen (DE); KORY, Gad, 69251 Gaiberg (DE); SÖTJE, Oliver, 68199 Mannheim (DE); WINTERLING, Helmut, 67061 Ludwigshafen (DE); ZEHNER, Peter, 67071 Ludwigshafen (DE); HEEGER, Michael, 67071 Ludwigshafen (DE); GANN, Martin, 67251 Freinsheim (DE); POLT, Axel, 67059 Ludwigshafen (DE); TREULING, Ulrich, 64625 Bensheim (DE); WEINLE, Werner, 74177 Bad Friedrichshall (DE)
(86) Internationale Anmeldenummer: PCT/EP2004/002875
(87) Internationale Veröffentlichungsnummer: WO 2004/085512

(56) Entgegenhaltungen:
- WO-A-99/43732
- US-B1- 6 437 089
- US-B1- 6 472 501
- US-B1- 6 479 620

## Beschreibung

Die vorliegende Erfindung betrifft ein Verfahren zur Herstellung von Polyamiden, deren Oligomeren oder Gemischen davon, gegebenenfalls mit weiteren Umsetzungsprodukten, durch Umsetzung von Aminonitrilen oder von Dinitrilen und Diaminen oder einem Gemisch enthaltend Aminonitril, Dinitiril und Diamin und gegebenenfalls weiteren polyamidbildenden Monomeren und/oder Oligomeren mit Wasser.

Verfahren zur Herstellung von Polyamiden, deren Oligomeren oder Gemischen davon, gegebenenfalls mit weiteren Umsetzungsprodukten, durch Umsetzung von Aminonitrilen oder von Dinitrilen und Diaminen oder einem Gemisch enthaltend Aminonitril, Dinitril und Diamin und gegebenenfalls weiteren polyamidbildenden Monomeren und/oder Oligomeren mit Wasser, insbesondere solche kontinuierlichen Verfahren, sind bekannt.

So beschreibt WO 99/43732 die Durchführung solcher insbesondere kontinuierlicher Verfahren in einer Reaktivdestillationsvorrichtung, wobei im unteren Teil der Reaktivdestillationsvorrichtung Wärme eingebracht wird. Die Umsetzungsprodukte werden der Reaktivdestillationsvorrichtung im Sumpf, bei der Reaktion entstehender Ammoniak, gegebenenfalls weitere entstehende niedermolekulare Verbindungen und Wasser über Kopf entnommen. Als mögliche Reaktivdestillationskolonnen werden Bodenkolonnen, Blasenkolonnen oder Trennwandkolonnen genannt.

US 6,201,096 beschreibt die Durchführung solcher insbesondere kontinuierlicher Verfahren in einer Reaktivdestillationsvorrichtung, wobei im unteren Teil der Reaktivdestillationsvorrichtung Wasserdampf eingebracht wird. Die als Produkt erhaltenen hochmolekularen Verbindungen werden der Reaktivdestillationsvorrichtung im Sumpf entnommen. Als mögliche Reaktivdestillationskolonnen werden Bodenkolonnen, wie solche mit Lochblechböden, genannt. Gemäß US 6,437,089 kann in dem in US 6,201,096 beschriebenen Verfahren ein Gemisch aus 6-Aminocapronitril und Caprolactam als Ausgangsmonomer eingesetzt werden.

Zur Vergleichmäßigung der Temperatur sollten gemäß US 6,201,096 und US 6,437,089 alle oder die meisten der Böden der Kolonne mit Hilfsmitteln zur unabhängigen Regelung der Temperatur der Böden ausgestattet sein, wie mit Heizelementen.

Gemäß WO 99/43732 ist in den genannten Verfahren die Phasendurchmischung wegen des geringen Flüssigkeits-hold-ups auf den Böden begrenzt. Zur Verbesserung der Phasendurchmischung könnte der Flüssigkeits-hold-up auf den Böden vergrößert werden. Dies führt allerdings zu einem höheren gasseitigen Druckverlust über die Böden. Hierdurch entsteht eine größere Temperaturspreizung über die Böden mit der Folge von sehr unterschiedlichen Reaktionsgeschwindigkeiten. Dies kann im unteren Teil des Reaktors zu Zersetzungen des Produkts führen, während im oberen Teil des Reaktors die Reaktion wegen zu niedriger Temperatur einschläft.

Zudem ist es Ziel der genannten Verfahren, eine Auftrennung des Gemischs aus Wasser und Ammoniak und der polymeren Produkte durch Rektifikation in Kopf- und Sumpfprodukt vorzunehmen. Dies bedingt einen Temperaturgradienten über die Höhe der Apparatur, um den gewünschten Trenneffekt zu erzielen.

So soll gemäß WO 00/24808 im oberen Teil des beschriebenen "multistage"-Reaktors die Temperatur, und darüber der Wassergehalt, derart eingestellt werden, dass einerseits eine ausreichende Hydrolyse gewährleistet ist; andererseits soll aber eine Entgasung niedermolekularer Umsetzungsprodukte vermieden werden.

Die Polymerisation in dem genannten "multistage"-Reaktor bringt also den Nachteil mit sich, dass die zur Einschränkung der Entgasung von niedermolekularen organischen Verbindungen im oberen Apparateteil erforderlichen niedrigen Temperaturen eine optimale Hydrolyse der Nitrilgruppen und Amidgruppen nicht in einer angemessenen Verweilzeit ermöglicht. Im unteren Teil des "multistage"-Reaktors liegt bei hohen Temperaturen ein so niedriger Wassergehalt vor, dass die Viskosität der Produktschmelze heraufgesetzt wird, so dass hohe gasseitige Strömungsverluste entstehen und zusätzlich Fremdenergie in Form von Rührenergie zugeführt werden muss, um eine ausreichende Durchmischung zu gewährleisten. Des weiteren wird bei hohen Temperaturen das Produkt geschädigt.

Wünschenswert ist bei diesen Verfahren eine weitere Vergleichmäßigung des Temperaturprofils über die Reaktorlängsachse und eine Verbesserung der Durchmischung der Reaktionskomponenten, die zu einer Reduzierung der durchschnittlichen Reaktionsdauer führen und so die Durchführung eines Verfahrens zur Herstellung von Polyamiden auf technisch einfache und wirtschaftliche Weise unter Vermeidung der genannten Nachteile ermöglichen.

Demgemäß wurde ein Verfahren zur Herstellung von Polyamiden, deren Oligomeren oder Gemischen davon, gegebenenfalls mit weiteren Umsetzungsprodukten, durch Umsetzung von Aminonitrilen oder Dintrilen und Diaminen oder einem Gemisch, enthaltend Aminonitril, Dinitril und Diamin, und gegebenenfalls weiteren polyamidbildenden Monomeren und/oder Oligomeren mit Wasser in einem Reaktor (1) mit vertikal ausgerichteter Längsachse, bei der in dem Reaktor (1) das Umsetzungsprodukt aus dem Sumpf ausgeschleust und entstehendes Ammoniak und gegebenenfalls weitere entstehende niedermolekulare Verbindungen und Wasser über Kopf abgezogen werden, dadurch gekennzeichnet, daß der Reaktor (1)
- mindestens zwei, in Längsrichtung übereinander angeordnete Kammern (4) wobei
- die Kammern (4) voneinander durch flüssigkeitsdichte Böden (5) getrennt sind,
- jede Kammer (4) durch je einen Flüssigkeitsüberlauf (6) mit der unmittelbar darunterliegenden Kammer (4) verbunden ist und über den Flüssigkeitsüberlauf (6) der untersten Kammer (4) ein flüssiger Produktstrom abgezogen wird,
- der Gasraum (7) oberhalb des Flüssigkeitsspiegels in jeder Kammer (4) mit der jeweils unmittelbar darüber angeordneten Kammer (4) durch ein oder mehrere Leitrohre (8) verbunden ist, das (die) jeweils in einen Gasverteiler (9) mit Öffnungen (11) für den Gasaustritt unterhalb des Flüssigkeitsspiegels mündet,
- sowie mit jeweils mindestens einem um jeden Gasverteiler (9) vertikal angeordneten Leitblech (12), dessen oberes Ende unterhalb des Flüssigkeitsspiegels und dessen unteres Ende oberhalb des flüssigkeitsdichten Bodens (5) der Kammer (4) endet und das jede Kammer (4) in einen oder mehrere begaste (13) und in einen oder mehrere unbegaste (14) Räume trennt.
gefunden.

Das Verfahren kann vorzugsweise kontinuierlich durchgeführt werden.

Das Verfahren kann vorteilhaft über Reaktor (1), vorzugsweise über die Kammern (4), insbesondere über die Kammern (4) mit Ausnahme der untersten Kammer (4), adiabatisch durchgeführt werden.

Reaktor (1) stellt einen Apparat dar, der ohne bewegte Apparateteile, durch eine Air-Lift-Umwälzung der Flüssigkeit, eine ausgezeichnete Phasendurchmischung bei mehrphasigen Reaktionen und eine nahezu konstante Zusammensetzung des Reaktionsgemisches jeweils über das gesamte Volumen in jeder Kammer gewährleistet, daß heißt sowohl über deren Querschnitt als auch insbesondere über die Flüssigkeitshöhe, bei gleichzeitig einfacher Auftrennung zwischen flüssiger und gasförmiger Phase nach erfolgter Reaktion. Durch den Gasaustritt aus dem Gasverteiler in den Flüssigkeitsraum zwischen Gasverteiler und dem oder den um den Gasverteiler herum vertikal angeordneten Leitblech oder Leitblechen wird der hydrostatische Druck in diesem Flüssigkeitsraum gegenüber dem nicht begasten Flüssigkeitsraum abgesenkt, wodurch ein Druckgefälle entsteht, das in kinetische Energie umgesetzt wird. Dieses Druckgefälle setzt die Air-Lift-Umwälzung in Form einer Strömung in Gang, die im fälle setzt die Air-Lift-Umwälzung in Form einer Strömung in Gang, die im begasten Raum, das heißt im Raum zwischen dem Gasverteiler und dem oder den um den Gasverteiler herum angeordneten Leitblech (Leitblechen) nach oben gerichtet ist, im Bereich oberhalb des obersten Endes des Leitblechs (der Leitbleche) und unterhalb des Flüssigkeitsspiegels durch das Leitblech (die Leitbleche) umgelenkt wird, den nicht begasten Flüssigkeitsraum außerhalb des Leitblechs (der Leitbleche) von oben nach unten durchströmt und oberhalb des flüssigkeitsdichten Bodens der Kammer und unterhalb des untersten Endes des Leitblechs (der Leitbleche) erneut in eine von unten nach oben gerichtete Strömung umgelenkt wird, wodurch die Schlaufenbewegung geschlossen wird.

Der Reaktor ist ein Apparat mit vertikal ausgerichteter Längsachse, d. h. ein hochstehender Apparat mit Zuführung eines oder mehrerer flüssiger, flüssig/fester, gasförmig/flüssiger oder gasförmig/flüssig/fester Eduktströme in seinem oberen Bereich und eines gasförmigen Stromes - Edukt und/oder Inertgas - in seinem unteren Bereich, das heißt mit Gegenstromführung des flüssigen, flüssig/festen und des gasförmigen Stromes.

Weiterhin kann man in den mittleren oder unteren Bereich von Reaktor (1) einen oder mehrere flüssige, flüssig/feste, gasförmig/flüssige oder gasförmig/flüssig/feste Ströme - Edukt, Zwischenprodukt, Produkt oder Inertgas oder Gemische mehrerer oder aller solcher Substanzen - zuführen. Vorteilhaft kommen für eine solche Zuführung in den mittleren oder unteren Bereich von Reaktor (1) Verbindungen in Betracht, die keine Nitrilgruppen aufweisen, vorzugsweise Diamine, insbesondere bei der Herstellung von Polyamiden aus Dinitrilen und Diaminen oder einem Gemisch enthaltend Aminonitril, Dinitril und Diamin.

Der Reaktor (1) ist aus mehreren, vorzugsweise übereinander angeordneten Kammern aufgebaut.

Die Zahl der Kammern kann vorteilhaft höchstens 200, bevorzugt höchstens 50, insbesondere höchstens 10 betragen.

Die Zahl der Kammern kann vorteilhaft mindestens 2, insbesondere mindestens 3 betragen.

Die Geometrie des Reaktors ist häufig zylindrisch, es sind jedoch auch andere Geometrien möglich.

Die Kammern sind voneinander durch flüssigkeitsdichte Böden getrennt, wobei jede Kammer durch je einen Flüssigkeitsüberlauf mit der unmittelbar darunter liegenden Kammer verbunden ist. Der Flüssigkeitsüberlauf kann dabei beispielsweise in Form eines Rohres oder eines Schachtes ausgebildet sein und er kann sowohl innerhalb als auch außerhalb des Reaktors angeordnet sein. Insbesondere können die Flüssigkeitsüberläufe zwei aufeinanderfolgender Kammern jeweils an einander gegenüberliegenden Seiten des Reaktors angeordnet sein. Aus der untersten Kammer wird über deren Flüssigkeitsüberlauf ein flüssiger Produktstrom abgezogen. Die unterste Kammer des Reaktors (1), der sogenannte Sumpfbereich, kann in mindestens zwei Kammern unterteilt sein. Diese mindestens zwei Kammern können nebeneinander oder übereinander oder übereinander und nebeneinander angeordnet sein.

In einer bevorzugten Ausführungsform kann man einen Teil des dem Sumpfbereich des Reaktors (1) entnommenen Produktstroms in flüssiger Form einem Wärmetauscher zuführen, mit Hilfe dieses Wärmetauschers das in dem Produktstrom enthaltene Wasser teilweise oder vollständig in den gasförmigen Zustand überführen und das den Wärmetauscher verlassende Gemisch dem Reaktor (1) zuführen. Vorzugsweise kann man Reaktor (1) verfahrensgemäß erhaltene Polyamide, Oligomere oder deren Gemische als Produkt flüssig, insbesondere im Sumpfbereich, entnehmen.

In einer anderen bevorzugten Ausführungsform kann man einen Teil oder die Gesamtheit des dem Sumpfbereich des Reaktors (1) entnommenen Produktstroms in flüssiger Form einem Wärmetauscher zuführen, mit Hilfe dieses Wärmetauschers das in dem Produktstrom enthaltene Wasser teilweise oder vollständig in den gasförmigen Zustand überführen, das gasförmige Wasser dem Reaktor (1) zuführen und das den Wärmetauscher verlassende flüssige Produkt als Wertprodukt erhalten.

In einer weiteren bevorzugten Ausführungsform kann man aus mindestens einer der im Sumpfbereich des Reaktors (1) befindlichen Kammern Produkt in flüssiger Form einem Wärmetauscher zuführen, mit Hilfe dieses Wärmetauschers das in dem Produktstrom enthaltene Wasser teilweise oder vollständig in den gasförmigen Zustand überführen und das den Wärmetauscher verlassende Gemisch dem Reaktor (1) zuführen. Vorzugsweise kann man Reaktor (1) verfahrensgemäß erhaltene Polyamide, Oligomere oder deren Gemische als Produkt flüssig, insbesondere im Sumpfbereich, entnehmen.

In einer weiteren bevorzugten Ausführungsform kann man aus mindestens einer der im Sumpfbereich des Reaktors (1) befindlichen Kammern Produkt in flüssiger Form einem Wärmetauscher zuführen, mit Hilfe dieses Wärmetauschers das in dem Produktstrom enthaltene Wasser teilweise oder vollständig in den gasförmigen Zustand überführen, das gasförmige Wasser dem Reaktor (1) zuführen und das den Wärmetauscher verlassende flüssige Produkt als Wertprodukt erhalten.

Der in diesen bevorzugten Ausführungsformen eingesetzte Wärmetauscher kann sich in dem Reaktor (1) oder außerhalb des Reaktors (1) oder teilweise innerhalb, teilweise außerhalb des Reaktors (1) befinden. Weiterhin kann der Wärmetauscher eine Vorrichtung oder mehrere getrennte Vorrichtungen umfassen.

Der Gasraum oberhalb des Flüssigkeitsspiegels in jeder Kammer ist mit der jeweils unmittelbar darüber angeordneten Kammer durch ein oder mehrere Leitrohre verbunden, das (die) jeweils in einen Gasverteiler mit Öffnungen für den Gasaustritt unterhalb des Flüssigkeitsspiegels mündet. Bezüglich der Anzahl und Anordnung der Leitrohre gibt es grundsätzlich keine Einschränkungen: es ist gleichermaßen möglich, ein einziges zentrales Leitrohr vorzusehen oder aber auch mehrere, über den Reaktorquerschnitt verteilt angeordnete Leitrohre. Ebenso ist es möglich, anstelle eines einzigen Gasverteilers pro Kammer mehrere getrennte Gasverteiler, jeweils mit Gaszuführung über ein oder mehrere Leitrohre, vorzusehen. In den Gasverteiler der vorletzten Kammer des Reaktors wird ein gasförmiger Strom über ein oder mehrere Leitrohre von außerhalb des Reaktors und/oder vom Sumpfbereich aus eingeleitet.

Es ist somit gleichermaßen möglich, einen einzigen Gasverteiler vorzusehen, mit Gaszuführung über ein oder mehrere Leitrohre, sowie auch mehrere miteinander nicht verbundene Gasverteiler, jeweils mit Gaszuführung über ein oder mehrere Leitrohre.

Bezüglich der vorliegend einsetzbaren Gasverteiler gibt es keine grundsätzlichen Einschränkungen: wesentlich ist, daß der Gasverteiler das ihm über das oder die Leitrohre zugeführte Gas aus dem Gasraum der unmittelbar darunter liegenden Kammer unterhalb des Flüssigkeitsspiegels der Kammer, in der der Gasverteiler angeordnet ist, austreten läßt. Der Gasaustritt soll dabei bevorzugt möglichst gleichförmig erfolgen. Als Gasverteiler kann grundsätzlich eine handelsübliche Begasungseinrichtung eingesetzt werden, beispielsweise Gasverteiler in Form von Rohren, die mit Austrittsöffnungen für das Gas ausgestattet sind und beispielsweise horizontal, das heißt in einer Ebene parallel zum flüssigkeitsdichten Boden der Kammer angeordnet sein können. Es ist auch möglich, ringförmige Gasverteiler vorzusehen. Die Öffnungen für den Gasaustritt müssen sich jedoch stets unterhalb des Flüssigkeitsspiegels in der Kammer befinden, bevorzugt in einem Abstand zum Flüssigkeitsspiegel von mindestens 10 % der gesamten Flüssigkeitshöhe in der Kammer, vorzugsweise von mindestens 30 %, besonders bevorzugt von mindestens 50 %. Es wurde gefunden, daß eine besonders günstige Eintauchtiefe der Öffnungen für den Gasaustritt unter dem Flüssigkeitsspiegel in der Kammer bei mindestens 50 mm liegt.

In einer bevorzugten Ausführungsvariante ist der Gasverteiler (die Gasverteiler) siphonartig ausgebildet, in Form einer oben geschlossenen Haube mit Öffnungen für den Gasaustritt in deren unterem Teil.

Die Haube kann, bis auf die Durchtrittsöffnungen für das oder die Leitrohre für die Gaszuführung und die Gasaustrittsöffnungen in ihrem unteren Teil vollständig geschlossen sein.

Es ist jedoch auch möglich, die Haube in deren unterem Teil offen auszubilden.

Das obere geschlossene Ende der Haube kann unterhalb des Flüssigkeitsspiegels enden, es kann jedoch auch über den Flüssigkeitsspiegel hinaus, in den Gasraum, reichen.

Die Haube des siphonartigen Gasverteilers kann grundsätzlich jede geometrische Form haben; es ist beispielsweise möglich, daß sie aus mehreren miteinander verbundenen Teilen besteht, die im Querschnitt bevorzugt kreuzförmige und/oder parallel oder konzentrisch oder radial angeordnet sind.

Die Öffnungen für den Gasaustritt sind bezüglich Anzahl, Querschnitt und Abstand vom Flüssigkeitsspiegel in der Kammer bevorzugt in der Weise ausgebildet, daß der Druckverlust des gasförmigen Stromes im Gasverteiler im Bereich von 0,1 bis 50 mbar liegt.

Die Öffnungen für den Gasverteiler sind bevorzugt auf derselben Höhe zueinander angeordnet.

Sie können grundsätzlich jede beliebige geometrische Form haben, beispielsweise kreisförmig, dreieckig oder schlitzförmig sein.

Die Mittellinie der Öffnungen liegt dabei bevorzugt in einem Abstand von ca. 1 cm bis 15 cm vom unteren Ende der Haube. Alternativ ist es auch möglich, anstelle von Öffnungen das untere Ende der Haube mit gezacktem Rand auszubilden. In einer weiteren Alternative ist es möglich, das untere Ende der Haube in Form eines Ringverteilers auszubilden.

Die Anordnung der Öffnungen auf unterschiedlicher Höhe zueinander kann für einen Betrieb mit zwei oder mehreren Lastbereichen vorteilhaft sein.

Die Höhe der Öffnungen für den Gasaustritt wird nach Bedarf in Abhängigkeit von der konkreten, im Reaktor durchzuführenden Reaktion so gewählt, daß zum einen genügend Stoffaustauschfläche für die konkrete gas/flüssig oder gas/flüssig/fest-Reaktion angeboten wird und zum anderen genügend Antrieb für die Air-Lift-Umwälzung der Flüssigkeit zur Verfügung gestellt wird.

Um jeden Gasverteiler ist im erfindungsgemäßen Reaktor mindestens ein vertikales Leitblech angeordnet, dessen oberes Ende unterhalb des Flüssigkeitsspiegels in der Kammer endet, vom Boden der Kammer beabstandet ist und das jede Kammer in einen oder mehrere begaste sowie einen oder mehrere unbegaste Räume trennt.

Das Leitblech kann in einer bevorzugten Ausführungsform als zylindermantelförmiges Einsteckrohr ausgebildet sein. Gleichfalls möglich ist jedoch auch beispielsweise die Form eines einfachen ebenen Bleches.

Das mindestens eine Leitblech ist vom Flüssigkeitsspiegel sowie vom Boden der Kammer beabstandet, bevorzugt dergestalt, daß im wesentlichen keine Drosselung der Flüssigkeitsströmung durch das Leitblech erfolgt. Die Abstände des Leitblechs oder der Leitbleche zur Flüssigkeitsoberfläche sowie auch zum Boden der Kammer sind somit bevorzugt in der Weise festzulegen, daß sich die Strömungsgeschwindigkeit der Flüssigkeit bei der Umlenkung durch das Leitblech nicht oder nur geringfügig verändert.

Bezüglich der Gesamthöhe des Leitblechs gibt es grundsätzlich keine Einschränkungen. Diese kann insbesondere in Abhängigkeit von der gewünschten Verweilzeit pro Kammer, unter gleichzeitiger Berücksichtigung einer ausreichenden Durchmischung, entsprechend dimensioniert werden.

In einer bevorzugten Ausführungsform kann in einer oder mehreren, bevorzugt in allen Kammern des Reaktors ein Feststoffkatalysator eingebracht sein, insbesondere als Feststoffschüttung oder in Form von mit Katalysator beschichteten geordneten Packungen, beispielsweise Monolithen.

Weiter bevorzugt kann in einer oder mehreren, bevorzugt in allen Kammern ein lonenaustauscherharz eingebracht sein.

Der Reaktor hat somit den Vorteil, daß er für gas/flüssig- oder gas/flüssig/fest-Reaktionen eine sehr gute Phasendurchmischung und somit einen hohen Umsatzgrad sowie nach erfolgter Durchmischung und Reaktion eine weitgehende Auftrennung von gasförmiger und flüssiger Phase gewährleistet. Da es für den Antrieb der Air-Lift-Umwälzung lediglich erforderlich ist, daß der Gasaustritt aus dem Gasverteiler unterhalb des Flüssigkeitsspiegels in der Kammer erfolgt, wobei der Abstand des Gasaustritts zum Flüssigkeitsspiegel grundsätzlich in sehr weiten Grenzen variieren kann, wird mit dem erfindungsgemäßen Reaktor ein Apparat zur Verfügung gestellt, bei dem Flüssigkeitsverweilzeit und Gasdruckverlust weitgehend entkoppelt sind.

### Der Reaktor wird im folgenden anhand von Figuren näher erläutert:

Es zeigen im einzelnen:
- Figur 1: einen Längsschnitt durch eine erste Ausführungsform einer Kammer (4) eines Reaktors (1), mit Querschnitt in Fig. 1a und
- Figur 2: einen Längsschnitt durch eine Kammer (4) einer zweiten Ausführungsform eines Reaktors (1), mit Querschnitt in Figur 2a und
- Figur 3: einen Längsschnitt durch eine Kammer (4) einer dritten Ausführungsform eines Reaktors (1), mit Querschnitt in Figur 3a

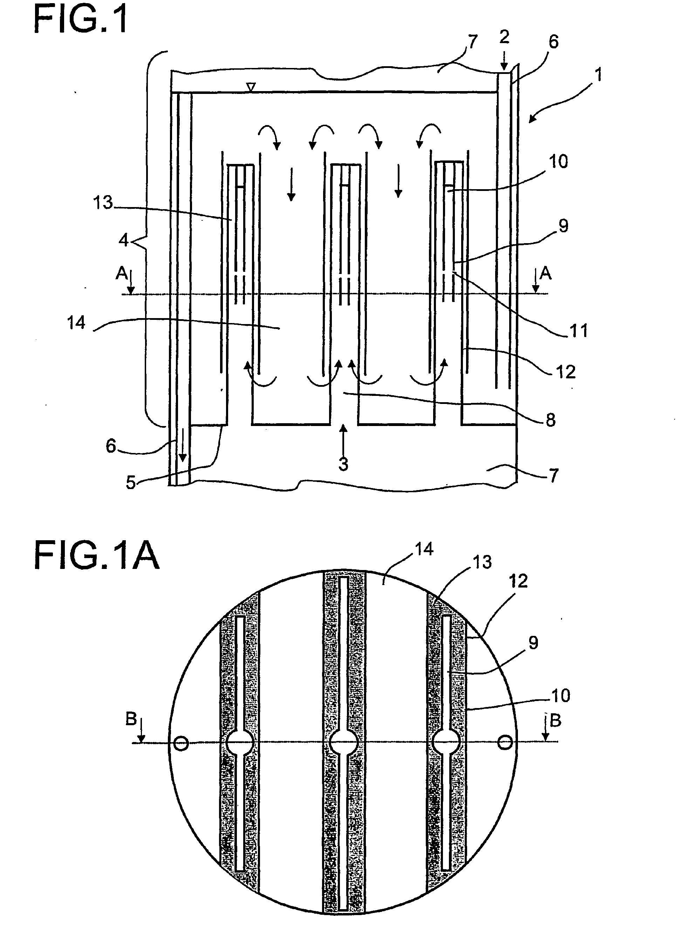

Fig. 1 zeigt beispielhaft eine von mehreren, in Längsrichtung übereinander angeordneten Kammern 4 eines Reaktors 1 mit Zuführung 2 eines flüssigen oder flüssig/festen-Eduktstroms im oberen Bereich und eines gasförmigen Stromes 3 im unteren Bereich des Reaktors 1, mit jeweils einem Boden 5 pro Kammer 4, Flüssigkeitsüberläufen 6, die beispielhaft innenliegend im Reaktor 1 dargestellt sind, mit jeweils einem Gasraum 7 oberhalb des Flüssigkeitsspiegels in jeder Kammer 4, der beispielhaft durch ein Leitrohr 8 mit der jeweils darüber liegenden Kammer 4 verbunden ist und in einen siphonartigen Gasverteiler 9 in Form einer oben geschlossenen Haube 10 mündet, mit Öffnungen 11 für den Gasaustritt in deren unterem Teil. Um den siphonartigen Gasverteiler 9 sind Leitbleche 12 angeordnet, die jeweils vom Flüssigkeitsspiegel und vom Boden der Kammer 4 beabstandet sind und die die Kammer 4 in mehrere begaste Räume 13 sowie mehrere unbegaste Räume 14 trennt.

In der Querschnittsdarstellung in Fig. 1a ist die Form der Haube 10 des Gasverteilers 9 verdeutlicht, vorliegend beispielhaft als aus parallel angeordneten Teilen ausgebildet.

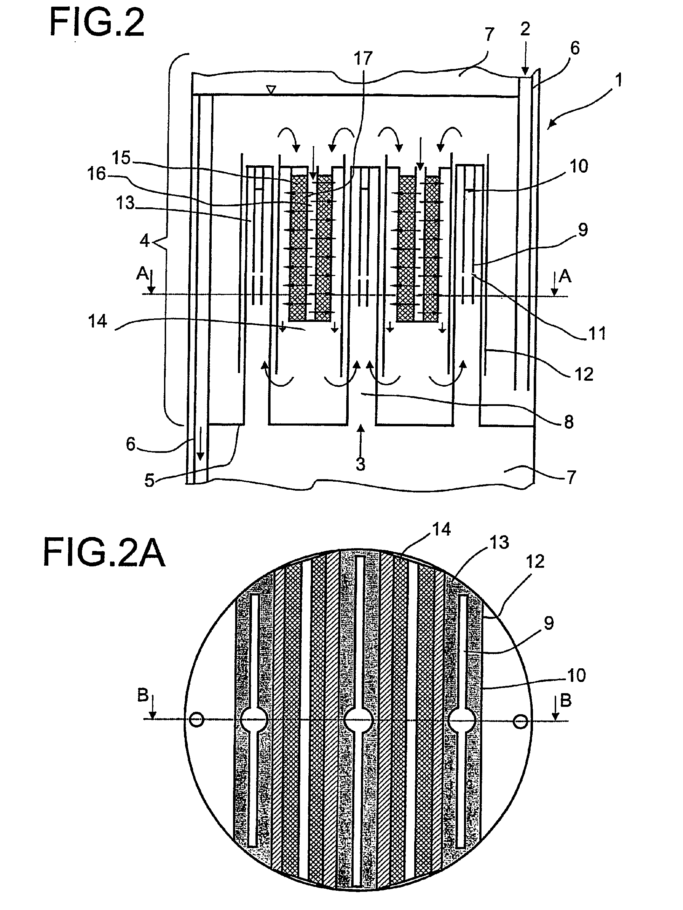

In der Längsschnittdarstellung einer weiteren beispielhaften Ausführungsform in Fig. 2 bezeichnen gleiche Bezugsziffern gleiche Merkmale wie in Fig. 1.

Zusätzlich ist der eingebrachte Katalysator 15 im Bereich des unbegasten Raumes 14 gekennzeichnet

In der Querschnittsdarstellung in Fig. 2a ist die Form der Haube 10 des Gasverteilers 9 verdeutlicht, vorliegend beispielhaft als aus parallel angeordneten Teilen ausgebildet.

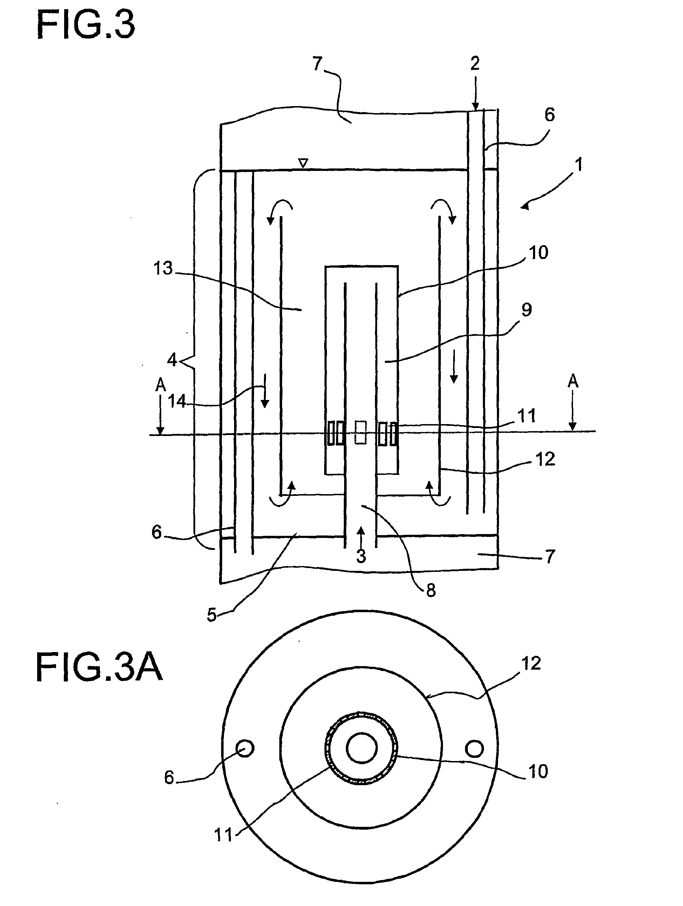

In der Längsschnittdarstellung einer weiteren beispielhaften Ausführungsform in Fig. 3 bezeichnen gleiche Bezugsziffern gleiche Merkmale wie in Fig. 1.

Die Querschnittsdarstellung in Fig. 3a verdeutlicht die beispielhaft radiale Anordnung der Teile der Haube 10 des siphonartigen Gasverteilers 9.

In einer möglichen Fahrweise werden zum Beispiel Aminonitril oder Dinitril und Diamin oder ein Gemisch, enthaltend Aminonitril, Dinitril und Diamin, und Wasser in der oberen Hälfte von Reaktor (1) eingespeist. Die bei der Reaktion entstehenden Leichtsieder (Ammoniak und Wasser) können dann im Kopf von Reaktor (1) angereichert und abgeführt werden, während das Wertprodukt aus Oligomeren und Polyamid als Schwerersieder im Sumpf anfällt.

In einer weiteren möglichen Fahrweise werden zum Beispiel Nitrilgruppen-haltige Verbindungen, insbesondere Aminonitril oder Dinitril oder ein Gemisch, enthaltend Aminonitril und Dinitril, und Wasser in der oberen Hälfte von Reaktor (1) eingespeist und Nitrilgruppen-freie Verbindungen, insbesondere Diamine, in den mittleren oder unteren Teil von Reaktor (1) eingespeist. Die bei der Reaktion entstehenden Leichtsieder (Ammoniak und Wasser) können dann im Kopf von Reaktor (1) angereichert und abgeführt werden, während das Wertprodukt aus Oligomeren und Polyamid als Schwerersieder im Sumpf anfällt.

Durch diese integrierte Prozeßführung mit kontinuierlicher Produktabtrennung wird ein idealer, paralleler Wärme- und Stoffaustausch mit hohem exergetischem Wirkungsgrad realisiert, der zudem durch ein schnelles Aufheizen der Edukte und ihre gleichmäßige Vermischung gekennzeichnet ist. Die Umsetzung kann unter Eigendruck durchgeführt werden.

Für das vorliegende Reaktionssystem gewährleistet die Gegenstromführung von Präpolymer und dem Reaktionsprodukt Ammoniak, kombiniert mit der kontinuierlichen Ammoniakabtrennung über das Kopfprodukt von Reaktor (1), sehr niedrige Ammoniakgehalte in den Teilen des Apparates, die weitgehend zu Wertprodukten umgesetztes Aminonitril enthalten.

Es wurde gefunden, daß durch das erfindungsgemäße Verfahren höhere Umsätze zum Wertprodukt als ohne kontinuierliche Ammoniakabtrennung über das Kopfprodukt erreicht werden, wodurch die Reaktionszeit verkürzt und die Bildung unerwünschter Nebenkomponenten reduziert wird.

Zur Unterstützung der Umsetzung können beliebige Katalysatoren eingesetzt werden, die die Hydrolyse und/oder Kondensation beschleunigen. Bevorzugt sind solche Katalysatoren, die entweder in fester Form eingebracht und folglich leicht vom Wertprodukt abgetrennt werden können oder aber als Beschichtung auf Reaktorteilen vorliegen.

Gegenstand der Erfindung ist ein, vorzugsweise kontinuierliches, Verfahren zur hydrolytischen Umsetzung von Aminonitrilen oder Dinitrilen und Diaminen oder einem Gemisch, enthaltend Aminonitril, Dinitril und Diamin, zu Polyamid und/oder dessen Vorprodukten und gegebenenfalls weiteren polyamidbildenden Mono- und Oligomeren zu Polyamid.

Vorzugsweise wird Aminonitril oder Dinitril und Diamin oder ein Gemisch, enthaltend Aminonitril, Dinitril und Diamin, auf einen Zwischenboden in den oberen Teil von Reaktor (1) dosiert. Aminonitril oder Dinitril und Diamin oder ein Gemisch, enthaltend Aminonitril, Dinitril und Diamin, fließt dann schwerkraftbedingt durch den Apparat nach unten und reagiert dabei kontinuierlich mit Wasser. Der entstehende Ammoniak steigt aufgrund seiner Flüchtigkeit kontinuierlich nach oben und kann am Kopf abgetrennt werden.

In einer weiteren bevorzugten Ausführungsform kann man zum Beispiel Nitrilgruppen-haltige Verbindungen, insbesondere Aminonitril oder Dinitril oder ein Gemisch, enthaltend Aminonitril und Dinitril, auf einen Zwischenboden in den oberen Teil von Reaktor (1) dosiert und Nitrilgruppen-freie Verbindungen, insbesondere Diamine, in den mittleren oder unteren Teil von Reaktor (1) eingespeisen. Die Nitrilgruppen-haltigen Verbindungen fließen dann schwerkraftbedingt durch den Apparat nach unten. Der entstehende Ammoniak steigt aufgrund seiner Flüchtigkeit kontinuierlich nach oben und kann am Kopf abgetrennt werden.

Über den optionalen Kopfkondensator können die Edukte gewünschtenfalls vorgewärmt werden.

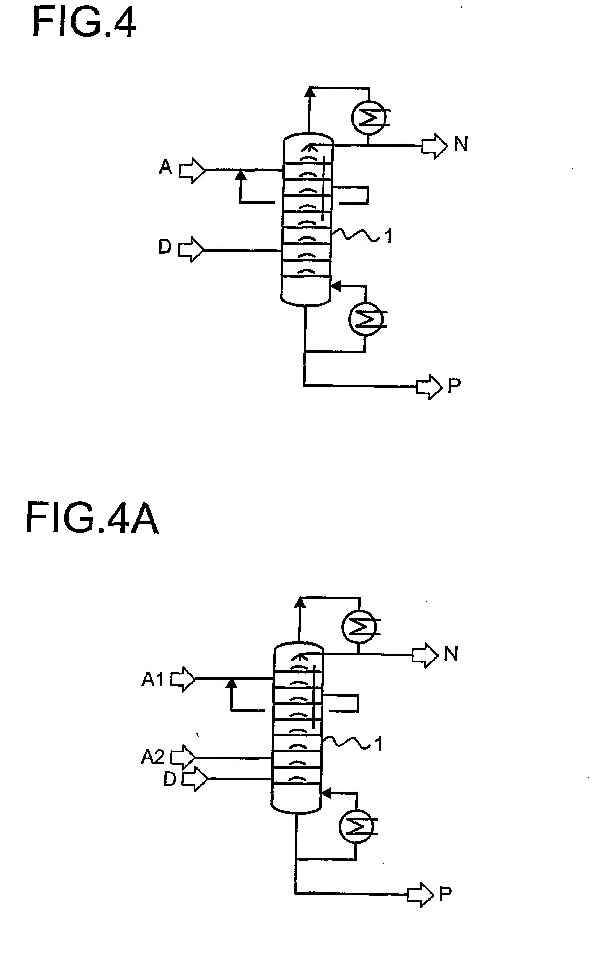

Eine derartige Prinzipskizze des erfindungsgemäßen Verfahrens zeigt in der Zeichnung Fig. 4:
- Fig. 4:: Verfahrensskizze einer Reaktion von Aminonitrilen zu Polyamid durch den Einsatz eines Reaktor (1). Dabei bedeuten A: Aminonitril, D: Dampf, N: Ammoniak, P: Polyamidpräpolymer.
- Fig. 4a:: Verfahrensskizze einer Reaktion von Dinitril und Diamin zu Polyamid durch den Einsatz eines Reaktor (1). Dabei bedeuten A1: Dinitril, A2: Diamin, D: Dampf, N: Ammoniak, P: Polyamidpräpolymer.

Es wurde gefunden, daß auch das Einbringen von Katalysatorpellets in den Apparat zu einer Vergleichmäßigung der Gas- und Flüssigkeitsströmung in der Säule führt.

Die Ammoniakreduktion in der Schmelze kann durch Strippen mit Inertgasen (wie Stickstoff) oder Wasserdampf zusätzlich unterstützt werden.

Als Aminonitril können prinzipiell alle Aminonitrile, das heißt Verbindungen, die sowohl mindestens eine Amino- als auch mindestens eine Nitrilgruppe aufweisen, eingesetzt werden. Unter diesen sind ω-Aminonitrile bevorzugt, wobei unter letzteren insbesondere ω-Aminoalkylnitrile mit 4 bis 12 C-Atomen, weiter bevorzugt 4 bis 9 C-Atomen im Alkylenrest, oder ein Aminoalkylarylnitril mit 8 bis 13 C-Atomen eingesetzt werden, wobei dort solche bevorzugt werden, die zwischen der aromatischen Einheit und der Amino- und Nitrilgruppe einen Alkyl-Spacer mit mindestens einem C-Atom aufweisen. Unter den Aminoalkylarylnitrilen sind insbesondere solche bevorzugt, die die Amino- und Nitrilgruppe in 1,4-Stellung zueinander aufweisen.

Als ω-Aminoalkylnitril setzt man weiter bevorzugt lineare ω-Aminoalkylnitrile ein, wobei der Alkylenrest (-CH₂-) vorzugsweise 4 bis 12 C-Atome, weiter bevorzugt von 4 bis 9 C-Atome enthält, wie 6-Amino-1-cyanopentan (6-Aminocapronitril), 7-Amino-1-cyanohexan, 8-Amino-1-cyanoheptan, 9-Amino-1-cyanooctan, 10-Amino-1-cyanononan, besonders bevorzugt 6-Aminocapronitril.

6-Aminocapronitril erhält man üblicherweise durch Hydrierung von Adipodinitril nach bekannten Verfahren, beispielsweise beschrieben in DE-A 836, 938, DE-A 848, 654 oder US 5,151,543.

Selbstverständlich können auch Gemische mehrerer Aminonitrile oder Gemische eines Aminonitrils mit weiteren Comonomeren, zum Beispiel Caprolactam oder das untenstehend näher definierte Gemisch, eingesetzt werden.

Als Dinitril können prinzipiell alle Dinitrile, das heißt Verbindungen, die mindestens zwei Nitrilgruppen aufweisen, eingesetzt werden. Unter diesen sind α,ω-Dinitrile bevorzugt, wobei unter letzteren insbesondere α,ω-Dinitrile mit 4 bis 12 C-Atomen, weiter bevorzugt 4 bis 9 C-Atomen im Alkylenrest, oder ein Cyanoalkylarylnitril mit 7 bis 12 C-Atomen eingesetzt werden, wobei dort solche bevorzugt werden, die zwischen der aromatischen Einheit und den beiden Nitrilgruppe einen Alkyl-Spacer mit mindestens einem C-Atom aufweisen. Unter den Cyanoalkylarylnitrilen sind insbesondere solche bevorzugt, die die beiden Nitrilgruppen in 1,4-Stellung zueinander aufweisen.

Als α,ω-Alkylendinitril setzt man weiter bevorzugt lineare α,ω-Alkylendinitrile ein, wobei der Alkylenrest (-CH₂-) vorzugsweise 3 bis 11 C-Atome, weiter bevorzugt von 3 bis 8 C-Atome enthält, wie 1,4-Dicyanbutan (Adipodinitril), 1,5-Dicyanpentan, 1,6-Dicyanhexan, 1,7-Dicyanheptan, 1,8-Dicyanooctan, 1,9-Dicyannonan, 1,10-Dicyandecan, besonders bevorzugt Adipodinitril.

Als Diamin können prinzipiell alle Diamine, das heißt Verbindungen, die mindestens zwei Aminogruppe aufweisen, eingesetzt werden. Unter diesen sind α,ω-Diamine bevorzugt, wobei unter letzteren insbesondere α,ω-Diamine mit 4 bis 14 C-Atomen, weiter bevorzugt 4 bis 10 C-Atomen im Alkylenrest, oder ein Aminoalkylarylamin mit 7 bis 12 C-Atomen eingesetzt werden, wobei dort solche bevorzugt werden, die zwischen der aromatischen Einheit und den beiden Nitrilgruppe einen Alkyl-Spacer mit mindestens einem C-Atom aufweisen. Unter den Aminoalkylarylaminen sind insbesondere solche bevorzugt, die die beiden Aminogruppen in 1,4-Stellung zueinander aufweisen.

Als α,ω-Alkylendiamin setzt man weiter bevorzugt lineare α,ω-Alkylendiamine ein, wobei der Alkylenrest (-CH₂-) vorzugsweise 3 bis 12 C-Atome, weiter bevorzugt von 3 bis 8 C-Atome enthält, wie 1,4-Diaminobutan, 1,5-Diaminopentan, 1,6-Diaminohexan (Hexamethylendiamin), 1,7-Diaminoheptan, 1,8-Diaminooctan, 1,9-Diaminononan, 1,10-Diaminodecan, besonders bevorzugt Hexamethylendiamin.

Gewünschtenfalls kann man auch Diamine, Dinitrile und Aminonitrile, die sich von verzweigten Alkylen- oder Arylen- oder Alkylarylenen ableiten, verwenden, wie 2-Methylglutarodinitril oder 2-Methyl-1,5-diaminopentan.

Setzt man bei der erfindungsgemäßen Herstellung von Polyamiden Dinitrile und Diamine oder ein Gemisch, enthaltend Dinitril, Diamin und Aminonitril, ein, so hat sich ein molares Verhältnis der in den Einsatzstoffen vorhandenen, zur Polyamidbildung fähigen Nitrilgruppen zu den in den Einsatzstoffen vorhandenen, zur Polyamidbildung fähigen Aminogruppen im Bereich von 0,9 bis 1,1, vorzugsweise 0,95 bis 1,05, insbesondere 0,99 bis 1,01, besonders bevorzugt von 1, als vorteilhaft erwiesen.

Als weitere polyamidbildende Monomere kann man beispielsweise Dicarbonsäuren, wie Alkandicarbonsäuren mit 6 bis 12 Kohlenstoffatomen, insbesondere 6 bis 10 Kohlenstoffatomen, wie Adipinsäure, Pimelinsäure, Korksäure, Azelainsäure oder Sebazinsäure sowie Terephthalsäure, Isophthalsäure und Cyclohexandicarbonsäure, oder Aminosäuren, wie Alkan-Aminosäuren mit 5 bis 12 Kohlenstoffatomen, insbesondere α, ω-C₅-C₁₂-Aminosäuren einsetzen.

Als α, ω-C₅-C₁₂-Aminosäure kann man 5-Aminopentansäure, 6-Aminohexansäure, 7-Aminoheptansäure, 8-Aminooctansäure, 9-Aminononansäure, 10-Aminodecansäure, 11-Aminoundecansäure und 12-Aminododecansäure, bevorzugt 6-Aminohexansäure, oder deren inneren Amide, sogenannte Lactame, insbesondere Caprolactam, einsetzen.

Als Ausgangsstoffe im erfindungsgemäßen Verfahren eignen sich ferner Gemische mit Aminocarbonsäureverbindungen der allgemeinen Formel I

R²R³N-(CH₂)ₘ-C(O)R¹ (I)

In der R¹ für -OH, -OC₁₋₁₂-Alkyl oder -NR²R³ unabhängig voneinander Wasserstoff, C₁₋₁₂-Alkyl und C₅₋₈-Cycloalkyl, und m für 3, 4, 5, 6, 7, 8, 9, 10, 11 oder 12 stehen.

Besonders bevorzugte Aminocarbonsäureverbindungen sind solche, in denen R¹ OH, -O-C₁₋₄Alkyl wie -O-Methyl, -O-Ethyl, -O-n-Propyl, -O-i-Propyl, -O-n-Butyl, -O-sek.-Butyl, -O-ter.-Butyl und -NR²R³ wie -NH₂, -NHMe, -NHEt, -NMe₂ und -NEt₂ bedeuten, und m für 5 steht.

Ganz besonders bevorzugt sind 6-Aminocapronsäure, 6-Aminocapronsäuremethylester, 6--Aminocapronsäureethylester, 6-Aminocapronsäuremethylamid, 6-Aminocapronsäuredimethylamid, 6-Aminocapronsäureethylamid, 6-Aminocapronsäurediethylamid und 6-Aminocapronsäureamid.

Die Ausgangsverbindungen sind im Handel erhältlich oder beispielsweise gemäß EP-A O 234 295 und Ind. Eng. Chem. Process Des. Dev. 17 (1978)9-16 herstellbar.

Es können auch beliebige Mischungen der genannten Verbindungen, Aminocarbonsäureverbindungen, Lactame, Diamine und Disäuren oder deren Salze eingesetzt werden.

Vorzugsweise werden als polyamidbildende Monomere Aminonitrile oder Dinitrile und Diamine oder Gemische, enthaltend Aminonitril, Dinitril und Diamin, zusammen mit Wasser, besonders bevorzugt in einem molaren Verhältnis im Bereich von 1 : 1 bis 1 : 20 eingesetzt, bezogen auf den Gesamtprozeß. Besonders bevorzugt ist dabei Aminocapronitril, bei einem molaren ACN : Wasser-Verhältnis im Gesamtprozeß von 1 : 1 bis 1 : 10. Weiterhin besonders bevorzugt ist dabei ein Gemisch aus Adipodinitril und Hexamethylendiamin, bei einem molaren Verhältnis der Summe aus Adipodinitril und Hexamethylendiamin : Wasser im Gesamtprozeß von 1 : 1 bis 1 : 10. Weiterhin besonders bevorzugt ist dabei ein Gemisch aus Adipodinitril, Hexamethylendiamin und Aminocapronitril, bei einem molaren Verhältnis der Summe aus Adipodinitril, Hexamethylendiamin und Aminocapronitril : Wasser im Gesamtprozeß von 1 : 1 bis 1 : 10.

Es können auch Gemische aus polyamidbildenden Monomeren und Oligomeren eingesetzt werden.

Vorzugsweise werden als polyamidbildende Monomere neben Aminocapronitril gewünschtenfalls Caprolactam und/oder Hexamethylendiammoniumadipat ("AH-Salz") verwendet.

Vorzugsweise werden als polyamidbildende Monomere neben Adipodinitril und Hexamethylendiamin gewünschtenfalls Caprolactam und/oder Hexamethylendiammoniumadipat ("AH-Salz") verwendet.

Als Katalysatoren kommen allgemein neben vielfach in der Literatur beschriebenen Säurekatalysatoren wie Phosphorsäure etc. besonders heterogene Katalysatoren in Frage. Bevorzugt werden Brönsted-saure Katalysatoren eingesetzt, ausgewählt aus einem Beta-Zeolith-, Schichtsilicat- oder einem Festbettkatalysator, der im wesentlichen aus TiO₂ mit 70 bis 100 Anatas und 0 bis 30 % Rutil besteht, in dem bis zu 40 % des TiO₂ durch Wolframoxid ersetzt werden können.

Beispielsweise können entsprechende TiO₂-Modifikationen, wie FINNTi S150 (Firma Kemira Pigments Oy, Finnland), Verwendung finden.

Die heterogenen Katalysatoren können beispielsweise als Suspension, auf Füllkörper gesintert oder als gegebenenfalls beschichtete Katalysatorpackung oder-schüttung oder-einbauten in den Apparat eingebracht werden. Sie können auch als Wandbelegung oder-beschüttung im Apparat vorliegen, so daß eine Abtrennung von Reaktionsgemisch einfach erfolgt.

Die Wasserkonzentration auf der Mehrzahl der Kammern von Reaktor (1), die unterhalb der Einspeisestelle der Aminonitrile oder Dinitrile und Diamine oder des Gemischs, enthaltend Dinitril, Diamin und Aminonitril, liegen, erreicht sehr hohe Konzentrationen (Molverhältnis Schwerersieder : Wasser etwa 1 : 4 bis 1 : 50, bevorzugt 1 : 10 bis 1 : 40) so daß, auch wenn die Komponenten stöchiometrisch in den Apparat dosiert werden, im Apparat selbst Wasser überstöchiometrisch vorliegen kann, was das Reaktionsgleichgewicht auf die Produktseite verschieben und die Geschwindigkeit der Gleichgewichtseinstellung erhöhen kann.

Die Temperatur für die Umsetzung sollte im Reaktionsteil von Reaktor (1), also unterhalb der Edukteinspeisung, in Abhängigkeit von der Wasserkonzentration, der Verweilzeit, der Verwendung von Katalysatoren sowie der Einsatzstoffzusammensetzung beziehungsweise Konzentration etwa 180°C bis 300°C, bevorzugt 200 bis 280°C und besonders bevorzugt 220 bis 270°C betragen. Die Temperaturen in den Kammern (4) von Reaktor (1) sollten vorteilhaft innerhalb eines engen Bereichs liegen, vorzugsweise innerhalb von 15°C, bevorzugt innerhalb von 10°C, insbesondere innerhalb von 8°C liegen.

Die zweiphasige Fahrweise erlaubt eine Absenkung des zur Reaktion notwendigen Druckniveaus, da gasförmige Bestandteile nicht - wie bei einer einphasigen Fahrweise - in der Flüssigphase gehalten werden müssen. Es stellt sich vorzugsweise lediglich der Eigendruck des Systems in Abhängigkeit von der Temperatur ein. Dieser beträgt etwa 10 bis 60 bar. Der apparative Aufwand wird durch die Integration von verfahrenstechnischen Operationen wie Wärme- und Stoffaustausch in ein und demselben Apparat reduziert.

Mit zunehmender Zahl der Kammern (4) nähert sich das Strömungsprofil der Flüssigphase im Apparat einer idealen Pfropfenströmung an, was zu einem sehr gleichmäßigen Verweilzeitspektrum im Apparat führt.

Das erhaltene Wertprodukt hat in Abhängigkeit von der Verweilzeit in Reaktor (1) den Prozeßtemperaturen, den Druckverhältnissen und weiterer verfahrenstechnischer Parameter ein unterschiedliches, in weiten Grenzen einstellbares Molekulargewicht sowie unterschiedliche Eigenschaften. Gewünschtenfalls kann nach der Reaktion eine weitere Verarbeitung des Produktes zur Einstellung gewünschter Produkteigenschaften erfolgen.

Vorteilhaft kann das Produkt zur Erhöhung des Molekulargewichts einer Polykondensation unterzogen werden. Eine solche Polykondensation kann nach an sich für die Herstellung und Nachbehandlung von Polyamiden bekannten Verfahren, wie in einem vollkontinuierlichen Strömungsrohr ("VK-Rohr"), durchgeführt werden.

Man kann das erhaltene Polyamid z. B. nach an sich bekannten Methoden, wie beispielsweise in der DE-A 43 21 683 (S. 3, Z. 54 bis S. 4, Z. 3) ausführlich beschrieben sind, aufarbeiten.

In einer bevorzugten Ausführungsform kann man den Gehalt an zyklischem Dimer im erfindungsgemäß erhaltenen Polyamid-6 weiter reduzieren, indem man das Polyamid zuerst mit einer wässerigen Lösung von Caprolactam und anschließend mit Wasser extrahiert und/oder der Gasphasenextraktion (beispielsweise beschrieben in der EP-A 0 284 968) unterwirft. Die bei dieser Nachbehandlung anfallenden niedermolekularen Bestandteile wie Caprolactam und lineare sowie zyklische Oligomere, kann man in das erfindungsgemäße Verfahren oder den vorgeschalteten Reaktor zurückführen.

Das nach der Extraktion erhaltene Polyamid kann man im allgemeinen anschließend in an sich bekannter Weise trocknen.

Vorteilhaft kann dies unter Mitverwendung von Inertgasen, wie Stickstoff oder überhitztem Wasserdampf, als Wärmeträger beispielsweise im Gegenstrom erfolgen. Hierbei kann die gewünschte Viskosität, bestimmt in 1 gew.-%-iger Lösung in 96 %-iger Schwefelsäure bei 25°C, durch Tempern bei erhöhter Temperatur, vorzugsweise im Bereich von 150°C bis 190°C, eingestellt werden.

Das erfindungsgemäße Verfahren zeichnet sich durch kontinuierliche Reaktionsführung, reduzierte Energie- und Einsatzstoffkosten und einen vergleichsweise geringen apparativen Aufwand aus. Das Verfahren kann also gegenüber bekannten Verfahren kostengünstiger arbeiten und ein höherwertigeres Produkt liefern.

Die Erfindung wird nachstehend anhand von Beispielen näher erläutert:

### Beispiel 1

In einem Reaktor (1) gemäß kennzeichnenden Ansprüchen mit 5 Stufen und einem Sumpfbereich wird ein kontinuierlicher Strom aus Caprolactam (9.7 Gew.-%) und Wasser (4.6 Gew.-%), Rest Nylon 6-Präpolymer wie in Beispiel 1 von US 6,437,089 eingesetzt im oberen Teil des Reaktors zugegeben.

Dieser Eingangsstrom hat einen Durchsatz von 20.4 kg/h und eine Temperatur von 250 °C.

Der Druck im Reaktor wird geregelt und beträgt 18.25 bar Überdruck. Die Sumpftemperatur wird geregelt und beträgt 265 °C.

Im Sumpf wird kontinuierlich überhitzter Wasserdampf (14.5 kg/h) bei einer Temperatur von 250°C zugegeben.

Der Temperaturverlauf im Reaktor entwickelt sich adiabatisch, wobei das mathematische Modell folgenden Temperaturverlauf berechnet: erste Kammer 257.6°C, zweite Kammer 257.1°C, dritte Kammer 256.8°C, vierte Kammer 256.1 °C und fünfte Kammer 254°C.

Die Gesamtverweilzeit im Reaktor beträgt 1.75 h inklusive einer Verweilzeit im Sumpfbereich von kleiner als 10 Minuten.

Die Berechnungsergebnisse liefern einen Gasstrom aus dem Kopf des Reaktors mit einem Durchsatz von 14.8 kg/h. Der Gasstrom beinhaltet 1.8 Gew.-% NH₃, 0.0015 Gew.-% ACN, 1.2 Gew.-% Caprolactam und ca. 97 Gew.-% Wasser.

Das mathematische Modell ergibt einen Nylon 6-Produktstrom von 20.1 kg/h mit 5.5 Gew.-% Wasser. Die Endgruppen ergeben sich wie folgt: 241 mmol/kg Amino-, 233 mmol/kg Carboxyl-, 3 mmol/kg Amid- und 5 mmol/kg Nitril-Endgruppen. In dem Produkt beträgt die durchschnittliche Zahl der Monomereinheiten pro Molekül 24.3.

Damit wird ein Wertprodukt mit vergleichbarer Qualität wie in Beispiel 1 von US 6,437,089 auf technisch einfachere und wirtschaftlichere Weise erhalten.

### Beispiel 2

Aus einer Mischung von 6-Aminocapronitril und Wasser wird bei einem Überdruck von 80 bar und einer Temperatur von 250 °C in einem Rohr-Reaktor ein Präpolymer hergestellt. Die Verweilzeit wird so ausgewählt, dass das Präpolymer 975 mmol/kg Amino-, 547 mmol/kg Carboxyl-, 423 mmol/kg Amid- und 5 mmol/kg Nitril-Endgruppen beinhaltet.

In einem Reaktor (1) gemäß kennzeichnenden Ansprüchen mit 5 Stufen und einem Sumpfbereich wird ein kontinuierlicher Strom aus Caprolactam (12.3 Gew.-%), Wasser (22:4 Gew.-%) und NH₃ (0.53 Gew.-%), Rest oben beschriebenes Nylon 6-Präpolymer im oberen Teil des Reaktors zugegeben.

Dieser Eingangsstrom hat einen Durchsatz von 37.7 kg/h und eine Temperatur von 235°C.

Der Druck im Reaktor wird geregelt und beträgt 28 bar Überdruck. Die Sumpftemperatur wird geregelt und beträgt 275°C.

Der Temperaturverlauf im Reaktor entwickelt sich adiabatisch, wobei das mathematische Modell folgenden Temperaturverlauf berechnet: erste Kammer 238.2°C, zweite Kammer 239.9°C, dritte Kammer 240.7°C, vierte Kammer 241 °C und fünfte Kammer 241.6°C.

Die Gesamtverweilzeit im Reaktor beträgt 1.65 h inklusive einer Verweilzeit im Sumpfbereich von kleiner als 10 Minuten.

Die Berechnungsergebnisse liefern einen Gasstrom aus dem Kopf des Reaktors mit einem Durchsatz von 6.3 kg/h. Der Gasstrom beinhaltet 7.5 Gew.-% NH₃, 0.000086 Gew.-% ACN, 0.077 Gew.-% Caprolactam und ca. 92.4 Gew.-% Wasser.

Das mathematische Modell ergibt einen Nylon 6-Produktstrom von 31.4 kg/h mit 8.9 Gew.-% Wasser. Die Endgruppen ergeben sich wie folgt: 338.2 mmol/kg Amino-, 334.6 mmol/kg Carboxyl-, 3.3 mmol/kg Amid- und 0.3 mmol/kg Nitril-Endgruppen. In dem Produkt beträgt die durchschnittliche Zahl der Monomereinheiten pro Molekül 21.9.

## Patentansprüche

1. Verfahren zur Herstellung von Polyamiden, deren Oligomeren oder Gemischen davon, gegebenenfalls mit weiteren Umsetzungsprodukten, durch Umsetzung von Aminonitrilen oder Dinitrilen und Diaminen oder einem Gemisch, enthaltend Aminonitril, Dinitril und Diamin, und gegebenenfalls weiteren polyamidbildenden Monomeren und/oder Oligomeren mit Wasser in einem Reaktor (1) mit vertikal ausgerichteter Längsachse, bei der in dem Reaktor (1) das Umsetzungsprodukt aus dem Sumpf ausgeschleust und entstehendes Ammoniak und gegebenenfalls weitere entstehende niedermolekulare Verbindungen und Wasser über Kopf (2) abgezogen werden, **dadurch gekennzeichnet, daß** der Reaktor (1)
- mindestens zwei, in Längsrichtung übereinander angeordnete Kammern (4) wobei
- die Kammern (4) voneinander durch flüssigkeitsdichte Böden (5) getrennt sind,
- jede Kammer (4) durch je einen Flüssigkeitsüberlauf (6) mit der unmittelbar darunterliegenden Kammer (4) verbunden ist und über den Flüssigkeitsüberlauf (6) der untersten Kammer (4) ein flüssiger Produktstrom abgezogen wird,
- der Gasraum (7) oberhalb des Flüssigkeitssspiegels in jeder Kammer (4) mit der jeweils unmittelbar darüber angeordneten Kammer (4) durch ein oder mehrere Leitrohre (8) verbunden ist, das (die) jeweils in einen Gasverteiler (9) mit Öffnungen (11) für den Gasaustritt unterhalb des Flüssigkeitsspiegels mündet,
- sowie mit jeweils mindestens einem um jeden Gasverteiler (9) vertikal angeordneten Leitblech (12), dessen oberes Ende unterhalb des Flüssigkeitsspiegels und dessen unteres Ende oberhalb des flüssigkeitsdichten Bodens (5) der Kammer (4) endet und das jede Kammer (4) in einen oder mehrere begaste (13) und in einen oder mehrere unbegaste (14) Räume trennt.

2. Verfahren nach Anspruch 1, wobei der Gasverteiler (9) von Reaktor (1) syphonartig in Form einer oben geschlossenen Haube (10), ausgebildet ist.

3. Verfahren nach Anspruch 2, wobei die Haube des siphonartigen Gasverteilers (9) in ihrem unteren Teil offen ist.

4. Verfahren nach Anspruch 2 oder 3, wobei die Haube(n) (1) des (der) siphonartigen Gasverteiler(s) (9) aus zwei oder mehreren miteinander verbundenen Teilen gebildet ist (sind), die im Querschnitt kreuzförmig und/oder parallel oder konzentrisch oder radial angeordnet sind.

5. Verfahren nach einem der Ansprüche 1 bis 4, wobei man die Anzahl und Größe der Öffnungen (11) für den Gasaustritt sowie deren Abstand vom Flüssigkeitsspiegel in der Kammer (4) in der Weise festlegt, daß der Druckverlust des gasförmigen Stromes im Gasverteiler (9) im Bereich von 0,5 bis 50 mbar ist.

6. Verfahren nach einem der Ansprüche 1 bis 4, wobei die Öffnungen (11) für den Gasaustritt auf jeweils gleicher Höhe zueinander angeordnet ist.

7. Verfahren nach einem der Ansprüche 2 bis 5, wobei die Öffnungen (11) für den Gasaustritt im unteren Teil der Haube(n) (1) in einem Abstand von 1 bis 15 cm vom unteren Ende der Haube(n) (10) angeordnet sind.

8. Verfahren nach einem der Ansprüche 1 bis 6, wobei das (die) Leitblech(e) jeweils derart zur Flüssigkeitsoberfläche sowie zum Boden der Kammer (4) beabstandet ist (sind), daß im wesentlichen keine Drosselung der Flüssigkeitsströmung durch das (die) Leitblech(e) (12) erfolgt.

9. Verfahren nach einem der Ansprüche 1 bis 8, wobei das jeweils mindestens eine um jeden Gasverteiler (9) vertikal angeordnete Leitblech (12) in Form eines Einsteckrohrs ausgebildet ist.

10. Verfahren nach einem der Ansprüche 1 bis 9, wobei das (die) Leitblech(e) und der (die) Gasverteiler (9) dergestalt angeordnet sind, daß die unbegaste Querschnittsfläche im Bereich von 10 bis 80 %, bevorzugt von 40 bis 60 %, besonders bevorzugt etwa 50 % der Summe von begaster und unbegaster Querschnittsfläche beträgt.

11. Verfahren nach einem der Ansprüche 1 bis 10, wobei in einer oder mehreren, bevorzugt in allen Kammern (4) des Reaktors (1) ein Feststoffkatalysator eingebracht ist, insbesondere als Feststoffschüttung oder in Form einer mit Katalysator beschichteten geordneten Packung, beispielsweise eines Monolithen.

12. Verfahren nach einem der Ansprüche 1 bis 10, **dadurch gekennzeichnet, daß** in einer oder mehreren, bevorzugt in allen Kammern (4) ein lonenaustauscherharz eingebracht ist.

13. Verfahren nach einem der Ansprüche 1 bis 11, wobei das Verfahren in Gegenwart von Brönsted-sauren Katalysatoren durchgeführt wird.

14. Verfahren nach Anspruch 13, wobei Brönsted-saure Heterogenkatalysatoren eingesetzt werden.

15. Verfahren nach einem der Ansprüche 1 bis 4, wobei die Umsetzung unter Eigendruck durchgeführt wird.

16. Verfahren nach einem der Ansprüche 1 bis 5, wobei Reaktor (1) mehrere theoretische oder reale Trennstufen aufweist.

17. Verfahren nach einem der Ansprüche 1 bis 16, wobei als polyamidbildende Monomere Aminonitrile und Wasser in einem molaren Verhältnis, bezogen auf den Gesamtprozeß, in einem Bereich von 1 : 1 bis 1 : 20 eingesetzt werden.

18. Verfahren nach einem der Ansprüche 1 bis 17, wobei Wasser von Wasserdampf eingesetzt wird.

19. Verfahren nach einem der Ansprüche 1 bis 28, wobei bei der Reaktion zusätzlich mit einem Inertgas gestrippt wird.

20. Verfahren nach einem der Ansprüche 1 bis 19, wobei man Reaktor (1) einen weiteren Reaktor vorschaltet.

21. Verfahren nach Anspruch 20, wobei der weitere vorgeschaltete Reaktor einphasig betrieben wird.

22. Verfahren nach Anspruch 20, wobei der weitere vorgeschaltete Reaktor zweiphasig betrieben wird.

23. Verfahren nach einem der Ansprüche 20 bis 22, wobei sich zwischen dem weiteren vorgeschalteten Reaktor und Reaktor (1) eine Vorrichtung zur Abtrennung von Reaktionsprodukten über die Gasphase befindet.

24. Verfahren nach einem der Ansprüche 1 bis 23, wobei man Reaktor (1) einen weiteren Reaktor nachschaltet.

25. Verfahren nach Anspruch 24, wobei der weitere nachgeschaltete Reaktor einphasig betrieben wird.

26. Verfahren nach Anspruch 24, wobei der weitere nachgeschaltete Reaktor zweiphasig betrieben wird.

27. Verfahren nach einem der Ansprüche 1 bis 26, wobei mindestens eine der Kammern (4) einen Wärmetauscher aufweist.

28. Verfahren nach einem der Ansprüche 1 bis 27, wobei man in mindestens eine der Kammern (4) Wasser flüssig oder gasförmig einspeist.

29. Verfahren nach einem der Ansprüche 1 bis 28, wobei der Sumpfbereich von Reaktor (1) in mindestens zwei Kammern unterteilt ist.

30. Verfahren nach Anspruch 29, wobei die Kammern nebeneinander angeordnet sind.

31. Verfahren nach Anspruch 29 oder 30, wobei die Kammern übereinander angeordnet sind.

32. Verfahren nach einem der Ansprüche 1 bis 31, wobei man ein Teil des dem Sumpfbereich des Reaktors (1) entnommenen Produktstroms in flüssiger Form einem Wärmetauscher zuführt, mit Hilfe dieses Wärmetauschers das in dem Produktstrom enthaltene Wasser teilweise oder vollständig in den gasförmigen Zustand überführt und das den Wärmetauscher verlassende Gemisch dem Reaktor (1) zuführt.

33. Verfahren nach einem der Ansprüche 1 bis 31, wobei man ein Teil des dem Sumpfbereich des Reaktors (1) entnommenen Produktstroms in flüssiger Form einem Wärmetauscher zuführt, mit Hilfe dieses Wärmetauschers das in dem Produktstrom enthaltene Wasser teilweise oder vollständig in den gasförmigen Zustand überführt, das gasförmige Wasser dem Reaktor (1) zuführt und das den Wärmetauscher verlassende flüssige Produkt als Wertprodukt erhält.

34. Verfahren nach einem der Ansprüche 29 bis 31, wobei man aus mindestens einer der im Sumpfbereich des Reaktors (1) befindlichen Kammern Produkt in flüssiger Form einem Wärmetauscher zuführt, mit Hilfe dieses Wärmetauschers das in dem Produktstrom enthaltene Wasser teilweise oder vollständig in den gasförmigen Zustand überführt und das den Wärmetauscher verlassende Gemisch dem Reaktor (1) zuführt.

35. Verfahren nach einem der Ansprüche 29 bis 31, wobei man aus mindestens einer der im Sumpfbereich des Reaktors (1) befindlichen Kammern Produkt in flüssiger Form einem Wärmetauscher zuführt, mit Hilfe dieses Wärmetauschers das in dem Produktstrom enthaltene Wasser teilweise oder vollständig in den gasförmigen Zustand überführt, das gasförmige Wasser dem Reaktor (1) zuführt und das den Wärmetauscher verlassende flüssige Produkt als Wertprodukt erhält.

## Claims

1. A process for the preparation of polyamides, oligomers thereof or mixtures thereof, if required with further reaction products, by reaction of aminonitriles or dinitriles and diamines or a mixture comprising aminonitrile, dinitrile and diamine, and, if required, further polyamide-forming monomers and/or oligomers with water in a reactor (1) having a vertically oriented longitudinal axis, in which, in the reactor (1), the reaction product is discharged from the bottom and ammonia formed and any further low molecular weight compounds formed and water are taken off via the top (2), wherein the reactor (1)
- at least two chambers (4) arranged one on top of the other in the longitudinal direction,
- the chambers (4) being separated from one another by liquid-tight trays (5),
- each chamber (4) being connected by a liquid overflow (6) to the chamber (4) directly underneath and a liquid product stream being taken off by the liquid overflow (6) of the lowermost chamber (4),
- the gas space (7) above the liquid level in each chamber (4) being connected to the chamber (4) arranged directly above in each case by one or more conduit pipes (8) which in each case opens or open into a gas distributor (9) having orifices (11) for gas exit below the liquid level,
- and comprising in each case at least one baffle plate (12) which is arranged vertically around each gas distributor (9) and whose upper end terminates below the liquid level and whose lower end terminates above the liquid-tight tray (5) of the chamber (4) and which separates each chamber (4) into one or more gassed (13) and into one or more ungassed (14) spaces.

2. The process according to claim 1, wherein the gas distributor (9) of reactor (1) is siphon-like in the form of a hood (10) closed at the top.

3. The process according to claim 2, wherein the hood of the siphon-like gas distributor (9) is open in its lower part.

4. The process according to claim 2 or 3, wherein the hood(s) (1) of the siphon-like gas distributor(s) (9) is or are formed from two or more parts which are connected to one another and in cross section are arranged crosswise and/or parallel or concentrically or radially.

5. The process according to any of claims 1 to 4, wherein the number and size of the orifices (11) for gas exit and the distance thereof from the liquid level in the chamber (4) is established in a manner such that the pressure drop of the gaseous stream in the gas distributor (9) is from 0.5 to 50 mbar.

6. The process according to any of claims 1 to 4, wherein the orifices (11) for gas exit is arranged in each case at the same height relative to one another.

7. The process according to any of claims 2 to 5, wherein the orifices (11) for gas exit are arranged in the lower part of the hood(s) (1) at a distance of from 1 to 15 cm from the lower end of the hood(s) (10).

8. The process according to any of claims 1 to 6, wherein the baffle plate(s) is or are in each case a distance away from the liquid surface and from the tray of the chamber (4) such that substantially no throttling of the liquid flow through the baffle plate(s) (12) occurs.

9. The process according to any of claims 1 to 8, wherein the in each case at least one baffle plate (12) arranged vertically around each gas distributor (9) is in the form of an inserted pipe.

10. The process according to any of claims 1 to 9, wherein the baffle plate(s) and the gas distributor(s) (9) are arranged in such a way that the ungassed cross sectional area is from 10 to 80%, preferably from 40 to 60%, particularly preferably about 50%, of the sum of gassed and ungassed cross sectional area.

11. The process according to any of claims 1 to 10, wherein a solid catalyst is introduced into one or more, preferably into all, chambers (4) of the reactor (1), in particular as a solid bed or in the form of a catalyst-coated stacked packing, for example of a monolith.

12. The process according to any of claims 1 to 10, wherein an ion exchange resin is introduced into one or more, preferably into all, chambers (4).

13. The process according to any of claims 1 to 11, which is carried out in the presence of Brönsted acid catalysts.

14. The process according to claim 13, wherein Brönsted acid heterogeneous catalysts are used.

15. The process according to any of claims 1 to 4, wherein the reaction is carried out under autogenous pressure.

16. The process according to any of claims 1 to 5, wherein reactor (1) has a plurality of the theoretical or actual plates.

17. The process according to any of claims 1 to 16, wherein aminonitriles and water in a molar ratio of from 1 : 1 to 1 : 20, based on the total process, are used as polyamide-forming monomers.

18. The process according to any of claims 1 to 17, wherein water from steam is used.

19. The process according to any of claims 1 to 28, wherein stripping with an inert gas is additionally effected in the reaction.

20. The process according to any of claims 1 to 19, wherein a further reactor is located upstream of reactor (1).

21. The process according to claim 20, wherein the further upstream reactor is operated using a one-phase procedure.

22. The process according to claim 20, wherein the further upstream reactor is operated using a two-phase procedure.

23. The process according to any of claims 20 to 22, wherein an apparatus for separating off the reaction products via the gas phase is present between the further upstream reactor and reactor (1).

24. The process according to any of claims 1 to 23, wherein a further reactor is located downstream of reactor (1).

25. The process according to claim 24, wherein the further downstream reactor is operated using a one-phase procedure.

26. The process according to claim 24, wherein the further downstream reactor is operated using a two-phase procedure.

27. The process according to any of claims 1 to 26, wherein at least one of the chambers (4) has a heat exchanger.

28. The process according to any of claims 1 to 27, wherein water is fed in liquid or gaseous form into at least one of the chambers (4).

29. The process according to any of claims 1 to 28, wherein the bottom region of reactor (1) is divided into at least two chambers.

30. The process according to claim 29, wherein the chambers are arranged side by side.

31. The process according to claim 29 or 30, wherein the chambers are arranged one on top of the other.

32. The process according to any of claims 1 to 31, wherein a part of the product stream removed from the bottom region of the reactor (1) is fed in liquid form to a heat exchanger, some or all of the water present in the product stream is converted into the gaseous state with the aid of this heat exchanger and the mixture leaving the heat exchanger is fed to the reactor (1).

33. The process according to any of claims 1 to 31, wherein a part of the product stream removed from the bottom region of the reactor (1) is fed in liquid form to a heat exchanger, some or all of the water present in the product stream is converted into the gaseous state with the aid of the heat exchanger, the gaseous water is fed to the reactor (1) and the liquid product leaving the heat exchanger is obtained as desired product.

34. The process according to any of claims 29 to 31, wherein product in liquid form is fed from at least one of the chambers present in the bottom region of the reactor (1) to a heat exchanger, some or all of the water present in the product stream is converted into the gaseous state with the aid of this heat exchanger and the mixture leaving the heat exchanger is fed to the reactor (1).

35. The process according to any of claims 29 to 31, wherein product in liquid form is fed from at least one of the chambers present in the bottom region of the reactor (1) to a heat exchanger, some or all of the water present in the product stream is converted into the gaseous state with the aid of this heat exchanger, the gaseous water is fed to the reactor (1) and the liquid product leaving the heat exchanger is obtained as desired product.

## Revendications

1. Procédé pour la production de polyamides, leurs oligomères, ou des mélanges de ceux-ci, le cas échéant avec d'autres produits de réaction, par réaction avec de l'eau, d'aminonitriles ou de dinitriles et de diamines ou d'un mélange contenant de l'aminonitrile, du dinitrile et de la diamine, et le cas échéant d'autres monomères et/ou oligomères pouvant former des polyamides, dans un réacteur (1) ayant un axe longitudinal dirigé verticalement, dans lequel le produit de réaction est éclusé dans le réacteur (1) hors du pied de cuve, et l'ammoniaque résultant, et le cas échéant d'autres composés de faible masse moléculaire, et l'eau sont retirés au sommet (2), **caractérisé en ce que** le réacteur (1) comporte :
- au moins deux chambres (4) superposées dans le sens de la longueur, où
- les chambres (4) sont séparées les unes des autres par des planchers étanches,
- chaque chambre (4) est reliée à la chambre (4) située immédiatement dessous par un trajet d'écoulement de liquide (6) respectif, et un flux de produit liquide est soutiré à travers le trajet d'écoulement de liquide (6) de la chambre du dessous (4),
- l'espace gazeux (7) est relié à la chambre (4) respective immédiatement superposée au-dessus du niveau de liquide dans chaque chambre (4) par une ou plusieurs conduites (8) qui débouchent au-dessous du niveau de liquide dans un collecteur de gaz (9) respectif ayant des ouvertures (11) pour l'échappement du gaz,
- ainsi que respectivement au moins un déflecteur (12) disposé verticalement autour de chaque collecteur de gaz (9), dont l'extrémité supérieure aboutit au-dessous du niveau de liquide, et dont l'extrémité inférieure aboutit au-dessus du plancher étanche (5) de la chambre (4), et sépare chacune des chambres (4) en un ou plusieurs espaces remplis de gaz (13) et en un ou plusieurs espaces non remplis de gaz (14).

2. Procédé selon la revendication 1, dans lequel le collecteur de gaz (9) du réacteur (1) est formé de manière à faire siphon sous la forme d'un capot (10) fermé en haut.

3. Procédé selon la revendication 2, dans lequel le capot du collecteur (9) faisant siphon est ouvert dans sa partie inférieure.

4. Procédé selon la revendication 2 ou 3 dans lequel le ou les capots (1) du ou des collecteurs (9) faisant siphon sont formés de deux ou plus de deux parties reliées entre elles qui, vues en coupe, sont disposées en forme de croix et/ou parallèlement ou concentriquement ou radialement.

5. Procédé selon l'une quelconque des revendications 1 à 4, dans lequel le nombre et la taille des ouvertures (11) pour l'échappement du gaz, ainsi que leur distance par rapport au niveau de liquide dans la chambre (4), sont fixés de manière à ce que la perte manométrique lu flux gazeux dans le collecteur de gaz (9) se situe dans une plage de 0,5 à 50 mbar.

6. Procédé selon l'une quelconque des revendications 1 à 4, dans lequel les ouvertures (11) pour l'échappement du gaz sont disposées les unes par rapport aux autres à une même hauteur respective.

7. Procédé selon l'une quelconque des revendications 2 à 5, dans lequel les ouvertures (11) pour l'échappement du gaz sont disposées dans la partie inférieure du ou des capots (1) à une distance de 1 à 15 cm de l'extrémité inférieure du ou des capots (10).

8. Procédé selon l'une quelconque des revendications 1 à 6, dans lequel le ou les déflecteurs sont placés respectivement à distance, de la surface de liquide, ainsi que du plancher de la chambre (4), essentiellement de manière à ce qu'aucune restriction du flux de liquide ne survienne à cause du ou des déflecteurs (12).

9. Procédé selon l'une quelconque des revendications 1 à 8, dans lequel le déflecteur (12), disposé verticalement, à raison de respectivement au moins un autour de chaque collecteur de gaz (9), est sous la forme d'un tube emboîtable.

10. Procédé selon l'une quelconque des revendications 1 à 9, dans lequel le ou les déflecteurs et le ou les collecteurs de gaz (9) sont disposés de manière que la superficie de section non remplie de gaz soit située dans une plage de 10 à 80 %, de manière préférée de 40 à 60 %, de manière particulièrement préférée d'environ 50 % de la somme des superficies des sections remplies et non remplies de gaz.

11. Procédé selon l'une quelconque des revendications 1 à 10, dans lequel un catalyseur solide est introduit dans une ou plusieurs, de manière préférée dans toutes les chambres (4) du réacteur (1), en particulier comme remblai de matière solide ou sous forme d'une garniture ordonnée recouverte de catalyseur, par exemple un monolithe.

12. Procédé selon l'une quelconque des revendications 1 à 10, **caractérisé en ce qu'**une résine échangeuse d'ions est introduite dans une ou plusieurs, de manière préférée dans toutes les chambres (4).

13. Procédé selon l'une quelconque des revendications 1 à 11, dans lequel le procédé est mis en oeuvre en présence de catalyseur acide au sens de Bronsted

14. Procédé selon la revendication 13, dans lequel des catalyseurs hétérogènes acides au sens de Bronsted sont utilisés.

15. Procédé selon l'une quelconque des revendications 1 à 4, dans lequel la réaction est mise en oeuvre sous pression inhérente.

16. Procédé selon l'une quelconque des revendications 1 à 5, dans lequel le réacteur (1) présente plusieurs étages de partition théoriques ou réels.

17. Procédé selon l'une quelconque des revendications 1 à 16, dans lequel de l'aminonitrile et de l'eau sont utilisés comme monomères pouvant former des polyamides, dans un rapport molaire, par rapport au processus total, situé dans une plage de 1:1 à 1:20.

18. Procédé selon l'une quelconque des revendications 1 à 17, dans lequel de l'eau issue de vapeur d'eau est utilisée.

19. Procédé selon l'une quelconque des revendications 1 à 28, dans lequel il y a un stripage complémentaire lors de la réaction avec un gaz inerte.

20. Procédé selon l'une quelconque des revendications 1 à 19, dans lequel un autre réacteur est connecté au réacteur (1) en amont.

21. Procédé selon la revendication 20, dans lequel l'autre réacteur connecté en amont fonctionne en monophasé.

22. Procédé selon la revendication 20, dans lequel l'autre réacteur connecté en amont fonctionne en diphasé.

23. Procédé selon l'une quelconque des revendications 20 à 22, dans lequel un dispositif pour la séparation des produits de réaction dans la phase gazeuse se trouve entre l'autre réacteur connecté en amont et le réacteur (1).

24. Procédé selon l'une quelconque des revendications 1 à 23, dans lequel un autre réacteur est connecté au réacteur (1) en aval.

25. Procédé selon la revendication 24, dans lequel l'autre réacteur connecté en aval fonctionne en monophasé.

26. Procédé selon la revendication 24, dans lequel l'autre réacteur connecté en aval fonctionne en diphasé.

27. Procédé selon l'une quelconque des revendications 1 à 26, dans lequel au moins une des chambres (4) présente un échangeur thermique.

28. Procédé selon l'une quelconque des revendications 1 à 27, dans lequel de l'eau sous forme liquide ou gazeuse est injectée dans au moins une des chambres (4).

29. Procédé selon l'une quelconque des revendications 1 à 28, dans lequel le secteur du pied de cuve du réacteur (1) est divisé en au moins deux chambres.

30. Procédé selon la revendication 29, dans lequel les chambres sont disposées les unes à côté des autres.

31. Procédé selon la revendication 29 ou 30, dans lequel les chambres sont disposées les unes au-dessus des autres.

32. Procédé selon l'une quelconque des revendications 1 à 31, dans lequel un échangeur thermique est alimenté avec une partie sous forme liquide du flux de produit prélevé dans le secteur du pied de cuve du réacteur (1), l'eau contenue dans le flux de produit est amenée à l'état gazeux, partiellement ou complètement, à l'aide de cet échangeur thermique, et le réacteur (1) est alimenté avec le mélange sortant de l'échangeur thermique.

33. Procédé selon l'une quelconque des revendications 1 à 31, dans lequel un échangeur thermique est alimenté avec une partie sous forme liquide du flux de produit prélevé dans le secteur du pied de cuve du réacteur (1), l'eau contenue dans le flux de produit est amenée à l'état gazeux, partiellement ou complètement, à l'aide de cet échangeur thermique, le réacteur (1) est alimenté avec l'eau à l'état gazeux, et le produit liquide sortant de l'échangeur thermique est recueilli en tant que produit de valeur.

34. Procédé selon l'une quelconque des revendications 29 à 31, dans lequel un échangeur thermique est alimenté avec du produit issu d'au moins une des chambres se trouvant dans le secteur du pied de cuve du réacteur (1), l'eau contenue dans le flux de produit est amenée à l'état gazeux, partiellement ou complètement, à l'aide de cet échangeur thermique, et le réacteur (1) est alimenté avec le mélange sortant de l'échangeur thermique.

35. Procédé selon l'une quelconque des revendications 29 à 31, dans lequel un échangeur thermique est alimenté avec du produit issu d'au moins une des chambres se trouvant dans le secteur du pied de cuve du réacteur (1), l'eau contenue dans le flux de produit est amenée à l'état gazeux, partiellement ou complètement, à l'aide de cet échangeur thermique, le réacteur (1) est alimenté avec l'eau à l'état gazeux, et le produit liquide sortant de l'échangeur thermique est recueilli en tant que produit de valeur.
